(19) Europäisches Patentamt / European Patent Office / Office européen des brevets

(11) **EP 3 829 978 B1**

(12) **FASCICULE DE BREVET EUROPEEN**

(45) Date de publication et mention
de la délivrance du brevet:
**16.03.2022 Bulletin 2022/11**

(21) Numéro de dépôt: **19740001.3**

(22) Date de dépôt: **18.07.2019**

(51) Classification Internationale des Brevets (IPC):
*B64D 27/24* (2006.01)    *B64D 27/02* (2006.01)
*B64D 27/12* (2006.01)    *B64C 21/06* (2006.01)
*B64D 31/06* (2006.01)    *B64D 27/20* (2006.01)
*B64D 35/04* (2006.01)

(52) Classification Coopérative des Brevets (CPC):
**B64D 27/02; B64C 21/06; B64D 27/12;
B64D 27/20; B64D 27/24; B64D 31/06;
B64D 35/04;** B64C 2230/04; B64C 2230/28;
B64D 2027/026; Y02T 50/10; Y02T 50/60

(86) Numéro de dépôt international:
**PCT/EP2019/069321**

(87) Numéro de publication internationale:
**WO 2020/025332 (06.02.2020 Gazette 2020/06)**

(54) **PROCEDE DE GESTION DE LA PUISSANCE PROPULSIVE D'UN AERONEF**

VERFAHREN ZUR STEUERUNG DES ANTRIEBSSCHUBS EINES FLUGZEUGS

METHOD FOR CONTROLLING PROPULSION THRUST OF AN AIRCRAFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.08.2018 FR 1857217**

(43) Date de publication de la demande:
**09.06.2021 Bulletin 2021/23**

(73) Titulaire: **SAFRAN**
**75015 Paris (FR)**

(72) Inventeurs:
- **ZARATI, Khaled**
**77550 MOISSY-CRAMAYEL (FR)**
- **GIANNAKAKIS, Panagiotis**
**77550 MOISSY-CRAMAYEL (FR)**

(74) Mandataire: **Argyma**
**14 Boulevard de Strasbourg**
**31000 Toulouse (FR)**

(56) Documents cités:
**EP-A1- 3 326 910    US-A1- 2012 209 456
US-A1- 2016 355 272    US-A1- 2018 118 356**

- **JASON WELSTEAD ET AL: "Conceptual Design
of a Single-Aisle Turboelectric Commercial
Transport with Fuselage Boundary Layer
Ingestion", 54TH AIAA AEROSPACE SCIENCES
MEETING, 4 janvier 2016 (2016-01-04),
XP055554823, Reston, Virginia DOI:
10.2514/6.2016-1027 ISBN: 978-1-62410-393-3**

EP 3 829 978 B1

## Description

### DOMAINE TECHNIQUE GENERAL ET ART ANTERIEUR

La présente invention concerne un aéronef comportant au moins un système propulsif latéral et au moins un système propulsif arrière qui est monté à une pointe arrière de l'aéronef afin d'ingérer une couche limite de l'aéronef. L'invention concerne plus particulièrement un procédé de gestion des systèmes propulsifs au cours des différentes phases de déplacement de l'aéronef.

De manière connue, un aéronef s'étend longitudinalement selon un axe et comporte des ailes latérales sur lesquelles sont montés des systèmes propulsifs latéraux, en particulier, des turbomoteurs. Afin d'augmenter l'efficacité de propulsion d'un aéronef, il est connu de monter un système propulsif arrière à une pointe arrière de l'aéronef afin d'ingérer un flux d'air de la couche limite de l'aéronef. Pour rappel, la couche limite est formée à la surface du fuselage. Dans une couche limite, la vitesse maximale du flux d'air est égale à 99% de la vitesse libre. Par conséquent, le flux d'air de la couche limite se déplace plus lentement que le flux d'air libre. Ainsi, lorsqu'un système propulsif arrière est configuré pour ingérer le flux d'air de la couche limite, le système propulsif arrière génère un flux d'air avec une vitesse d'échappement plus faible que les systèmes propulsifs latéraux placés sous les ailes de l'aéronef et configurés pour absorber le flux d'air libre, ce qui augmente l'efficacité du système propulsif arrière.

Actuellement, le système propulsif arrière est utilisé à puissance constante dans les différentes phases de déplacement (décollage, ralenti au sol et vol, montée et croisière, etc.) afin de réduire la puissance des systèmes propulsifs latéraux et ainsi limiter la consommation de l'aéronef.

En pratique, la puissance fournie par le système propulsif arrière peut entraîner des perturbations des systèmes propulsifs latéraux, ce qui peut engendrer des problèmes d'opérabilité ainsi que des problèmes de pompage des systèmes propulsifs latéraux. Dans les faits, plus la contribution du système propulsif arrière est importante, plus les inconvénients cités précédemment sont importants.

La gestion de la puissance d'un système propulsif arrière est particulièrement complexe étant donné qu'elle doit être, d'une part, maximisée pour permettre une réduction de la consommation de carburant de l'aéronef et, d'autre part, limitée pour réduire le risque des perturbations des systèmes propulsif latéraux.

L'invention a pour but de remédier à ces inconvénients en proposant un nouveau procédé pour gérer de manière optimale la puissance d'un système propulsif arrière.

De manière incidente, on connaît par la demande de brevet US2018/118356A1 une architecture entièrement électrique sans systèmes latéraux thermiques, par la demande de brevet EP3326910A1 une architecture hybride avec un système propulsif arrière pour réduire les effets de trainée visqueuse et par la demande de brevet US2016/355272 une architecture multi-rotor.

### PRESENTATION GENERALE DE L'INVENTION

A cet effet, l'invention concerne un procédé de gestion de la puissance de propulsion d'un aéronef, l'aéronef s'étendant longitudinalement selon un axe X d'arrière en avant et comprenant au moins deux systèmes propulsifs latéraux thermiques comprenant chacun une soufflante, chaque système propulsif latéral ayant un régime de rotation de soufflante $N_2$ et au moins un système propulsif arrière configuré pour ingérer une couche limite dudit aéronef, le système propulsif arrière comprenant une soufflante ayant un régime de rotation de soufflante $N_3$.

L'invention est remarquable en ce qu'il comprend, au cours d'une phase de croisière P4, une étape de réglage du régime de rotation $N_3$ du système propulsif arrière 3 selon la formule suivante :

$$N_3 = a * N_2$$

dans laquelle a est une constante.

De manière avantageuse, lors d'une phase de croisière, le régime du système propulsif arrière $N_3$ est synchronisé avec le régime $N_2$ des soufflantes des systèmes propulsifs latéraux, de manière à optimiser les performances du système propulsif arrière et des systèmes propulsifs latéraux.

De manière préférée, la soufflante d'un système propulsif latéral ayant un diamètre d2, la soufflante d'un système propulsif arrière ayant un diamètre d3, le procédé comprend, au cours d'une phase de croisière P4, une étape de réglage du régime de rotation $N_3$ du système propulsif arrière selon la formule suivante :

$$d_3 * N_3 = b * d_2 * N_2$$

dans laquelle b est une constante comprise entre 0,85 et 1,15.

De manière avantageuse, les vitesses en tête des aubes de soufflantes sont égales. Une constante b comprise entre 0,85 et 1,15 permet d'offrir une variation de puissance de 15% qui est acceptable pour conserver des performances optimales. Les systèmes propulsifs latéraux sont thermiques de manière à produire de la poussée et de la puissance électrique. De manière préférée, les systèmes propulsifs latéraux se présentent sous la forme de turbomoteurs.

De préférence encore, le procédé comprend au cours d'une phase de montée P1 de l'aéronef, une étape de réglage du régime de rotation $N_3$ du système propulsif arrière à un premier régime de rotation de référence $N_{S1}$

de manière à fournir une première puissance propulsive constante prédéterminée $VP_1$.

De manière avantageuse, la puissance propulsive du système propulsif arrière est bridée à une valeur de puissance $VP_1$ utilisée pendant la phase de montée P1. Cela est particulièrement avantageux pour améliorer la durée de vie du système propulsif arrière, en particulier, lorsqu'il comporte un moteur électrique, et la durée de vie des systèmes propulsifs latéraux, en particulier, lorsqu'ils comportent des génératrices de courant.

De préférence, le procédé comprend, au cours d'une phase de ralenti P3, une étape de réglage du régime de rotation $N_3$ du système propulsif arrière en fonction du régime de rotation $N_2$ des systèmes propulsifs latéraux dans lequel :

- si le régime de rotation $N_2$ des systèmes propulsifs latéraux multiplié par la constante a est inférieur au premier régime de rotation de référence $N_{S1}$, le régime de rotation $N_3$ du système propulsif arrière est réglé de manière à être fonction du régime de rotation $N_2$ des systèmes propulsifs latéraux 2. De manière préférée, le régime de rotation $N_3$ du système propulsif arrière 3 est défini selon la formule $N_3 = a * N_2$ présentée précédemment,
- si le régime de rotation $N_2$ des systèmes propulsifs latéraux multiplié par la constante a est supérieur au premier régime de rotation de référence $N_{S1}$, le régime de rotation $N_3$ du système propulsif arrière est égal au premier régime de rotation de référence $N_{S1}$.

De manière avantageuse, lors d'une phase de ralenti, le régime du système propulsif arrière $N_3$ est synchronisé avec le régime $N_2$ des soufflantes des systèmes propulsifs latéraux, de manière à optimiser les performances du système propulsif arrière et des systèmes propulsifs latéraux.

De manière, le procédé comprend, au cours d'une phase de décollage P2, une étape de réglage du régime de rotation $N_3$ du système propulsif arrière à un deuxième régime de rotation de référence $N_{S2}$ de manière à fournir une deuxième puissance propulsive prédéterminée $VP_2$ strictement supérieure à la première puissance propulsive prédéterminée $VP_1$.

Lors de la phase de décollage, il est important de fournir une poussée propulsive importante. De manière avantageuse, le système propulsif arrière est utilisé à fort régime afin de limiter la consommation de carburant des systèmes propulsifs latéraux lors de la phase de décollage et afin de limiter les problèmes de pompages des systèmes propulsifs latéraux.

De manière préférée, la deuxième puissance propulsive prédéterminée $VP_2$ est définie selon la formule suivante :

$$V_{p2} = V_{p1} + F1$$

- dans laquelle F1 est une fonction d'adaptation positive qui dépend notamment de l'altitude et de la vitesse de l'aéronef.

Ainsi, la puissance propulsive arrière est augmentée par rapport à la valeur $VP_1$ en fonction des conditions de vol de l'aéronef, afin de prévenir tout phénomène de pompage dans les systèmes propulsifs latéraux. De préférence encore, la fonction d'adaptation positive est également fonction de la position de la manette et de la température ambiante.

Selon un aspect de l'invention, le système propulsif arrière comporte au moins une soufflante entraînée par un moteur électrique. Un système propulsif arrière alimenté électriquement permet de limiter la consommation de carburant. De préférence, le moteur électrique est alimenté par au moins une génératrice prélevant un couple mécanique sur un arbre, notamment basse pression, d'un des systèmes propulsifs latéraux.

De manière préférée, la première puissance propulsive $VP_1$ est prédéterminée en fonction de la puissance maximale continue du moteur électrique du système propulsif arrière. De manière avantageuse, la première puissance propulsive $VP_1$ est déterminée pour maximiser l'ingestion de la couche limite du fuselage et optimiser la consommation de carburant.

Selon un aspect de l'invention, le procédé de gestion comprend, en cas de panne d'un des systèmes propulsifs latéraux, une étape de réglage du régime de rotation $N_3$ du système propulsif arrière de manière à être égal à un troisième régime de rotation de référence $N_{S3}$ afin de fournir la moitié de la première puissance propulsive prédéterminée $V_{P1}$.

Etant donné que seul un des systèmes propulsifs latéraux est opérationnel, la puissance propulsive du système propulsif arrière est diminuée de 50% afin de ne pas engendrer la surcharge du seul système propulsif latéral qui est opérationnel.

Etant donné que seul un des systèmes propulsifs latéraux est opérationnel, la puissance propulsive du système propulsif arrière est diminuée de 50% afin de ne pas engendrer la surcharge du seul système propulsif latéral qui est opérationnel.

De préférence, en dehors de la phase de croisière, le régime de rotation $N_3$ du système propulsif arrière est déterminé comme suit $N_3 \leq a * N_2$ de manière à obtenir des performances optimales. Cela permet d'adapter le régime de rotation du système propulsif arrière en fonction des contraintes spécifiques liées à la montée, au ralenti et au décollage.

De préférence, chaque système propulsif latéral comprenant au moins une vanne de décharge, le procédé comprend, en cas de panne du système propulsif arrière, une étape d'ouverture des vannes de décharge des systèmes propulsifs latéraux. L'absence de propulsion arrière engendre une forte compression dans les compresseurs basse-pression des systèmes propulsifs latéraux. L'ouverture des vannes de décharge permet de limiter la pression et donc d'éviter un phénomène de pompage des compresseurs basse-pression des systèmes propulsifs latéraux.

L'invention concerne également un programme d'ordinateur comprenant des instructions pour l'exécution des étapes d'un procédé de gestion tel que présenté précédemment lorsque ledit programme est exécuté par un ordinateur.

Il est également présenté une unité électronique pour aéronef comprenant une mémoire comprenant des instructions d'un programme d'ordinateur tel que présenté précédemment.

**PRESENTATION DES FIGURES**

L'invention sera mieux comprise à la lecture de la description qui va suivre, donnée uniquement à titre d'exemple, et se référant aux dessins annexés sur lesquels :

- la figure 1 est une représentation schématique d'un aéronef avec un système propulsif arrière selon l'invention,
- la figure 2 est une représentation schématique des systèmes propulsifs et d'une unité électronique,
- la figure 3 représente un schéma bloc fonctionnel de la phase de montée du procédé de gestion selon l'invention,
- la figure 4 représente un schéma bloc fonctionnel de la phase de décollage du procédé de gestion selon l'invention,
- la figure 7 représente la variation du régime de rotation du système propulsif arrière en fonction du régime de rotation du système propulsif latéral lors de la phase de ralenti pour des conditions de vol constantes,
- la figure 8 est une représentation d'un schéma bloc fonctionnel de la phase de croisière du procédé de gestion selon l'invention,
- la figure 9 est une représentation d'un schéma bloc fonctionnel du procédé de gestion selon l'invention en cas de panne d'un système propulsif latéral et
- la figure 10 est une représentation d'un schéma bloc fonctionnel du procédé de gestion selon l'invention en cas de panne d'un système propulsif arrière.

Il faut noter que les figures exposent l'invention de manière détaillée pour mettre en oeuvre l'invention, lesdites figures pouvant bien entendu servir à mieux définir l'invention le cas échéant.

**DESCRIPTION D'UN OU PLUSIEURS MODES DE REALISATION ET DE MISE EN OEUVRE**

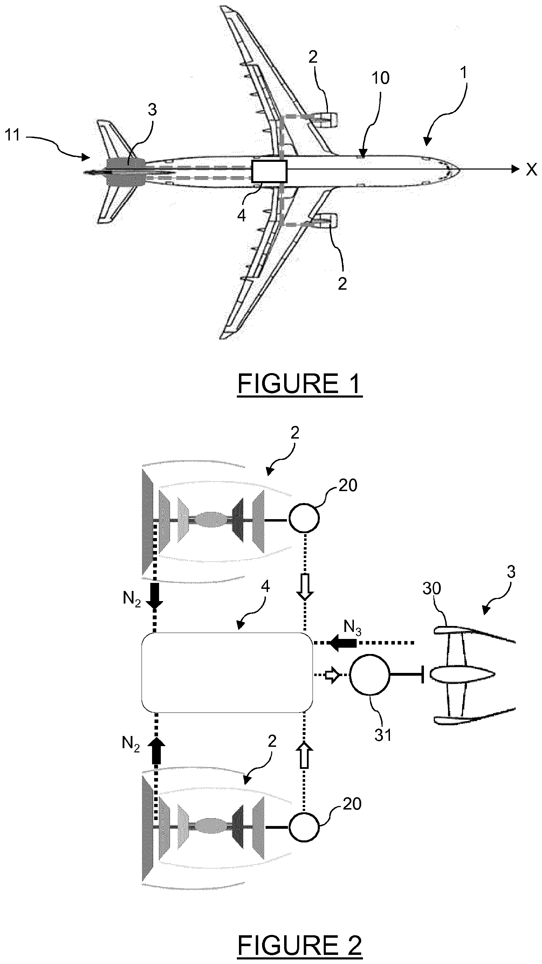

En référence à la figure 1, il est représenté un aéronef 1 s'étendant longitudinalement selon un axe X et comportant des ailes latérales sur lesquelles sont montés des systèmes propulsifs latéraux 2, en particulier, thermiques tels que des turbomoteurs. Un tel système propulsif latéral thermique 2 permet de générer de la poussée. De manière préférée, le système propulsif latéral est un turbomoteur à double flux. Il comporte de manière préférée un compresseur basse pression, un compresseur haute pression, une turbine basse pression et une turbine haute pression.

Afin d'augmenter l'efficacité de propulsion d'un aéronef, l'aéronef 1 comporte en outre une pointe arrière 11 sur laquelle est monté un système propulsif arrière 3 afin d'ingérer un flux d'air de la couche limite de l'aéronef 1. Pour rappel, la couche limite est formée à la surface du fuselage. Dans une couche limite, la vitesse maximale du flux d'air est égale à 99% de la vitesse libre. Par conséquent, le flux d'air de la couche limite se déplace plus lentement que le flux d'air libre. Ainsi, lorsqu'un système propulsif arrière 3 est configuré pour ingérer le flux d'air de la couche limite, le système propulsif arrière 3 génère un flux d'air avec une vitesse d'échappement plus faible que les systèmes propulsifs latéraux 2 placés sous les ailes de l'aéronef et configurés pour absorber le flux d'air libre, ce qui augmente l'efficacité du système propulsif arrière 3. Par la suite, chaque système propulsif latéral 2 possède un régime de rotation $N_2$. Dans cet exemple, chaque système propulsif latéral 2 comporte une soufflante et le régime de rotation $N_2$ correspond au régime de soufflante $N_2$. De manière préférée, la soufflante est solidaire en rotation du compresseur basse pression.

Les régimes de rotation $N_2$ des deux systèmes propulsifs latéraux 2 sont égaux. Comme cela sera présenté par la suite, chaque système propulsif latéral 2 comporte au moins une vanne de décharge configurée pour décharger de l'air situé dans un étage de compression d'un système propulsif latéral 2. De manière analogue, le système propulsif arrière 3 possède un régime de rotation $N_3$. Dans cet exemple, le système propulsif arrière 3 comporte une soufflante et le régime de rotation $N_3$ correspond au régime de soufflante $N_3$. Dans cet exemple, l'aéronef 1 comporte en outre une unité électronique 4 reliée aux systèmes propulsifs latéraux 2 et au système propulsif arrière 3 afin de commander leurs régimes respectifs $N_2$, $N_3$. L'unité électronique 4 se présente sous la forme d'une carte électronique recevant différentes informations et mesures de l'aéronef et des systèmes propulsifs 2, 3.

Dans cet exemple de mise en oeuvre, en référence à la figure 2, le système propulsif arrière 3 comporte une soufflante 30 qui est entraînée par un moteur électrique 31 qui est lui-même commandé par l'unité électronique 4. Un système propulsif arrière 3 permet de fournir de la poussée en limitant la consommation de carburant, ce qui est avantageux. De manière préférée, le moteur électrique 31 est alimenté par une ou plusieurs génératrices électriques 20 qui prélèvent de la puissance mécanique sur les systèmes propulsifs latéraux 2. Pour un système propulsif latéral 2 se présentant sous la forme d'une turbomachine à double corps comprenant un arbre basse-pression et un arbre haute-pression, la puissance mécanique est de préférence prélevée sur l'arbre basse-pression.

Il va dorénavant être présenté un exemple de mise en oeuvre d'un procédé de gestion de la puissance de propulsion d'un aéronef 1 selon différentes phases de déplacement de l'aéronef 1. Dans cet exemple, le procédé de gestion est mis en oeuvre par l'unité électronique 4.

En particulier, comme cela sera présenté par la suite, le procédé de gestion vise à régler la puissance propulsive $P_3$ du système propulsif arrière 3 en réglant le régime de rotation $N_3$ du système propulsif arrière 3 selon la phase du déplacement de l'aéronef 1 et en fonction du régime de rotation $N_2$ des systèmes propulsifs latéraux 2.

L'unité électronique 4 mesure en temps réel la valeur des régimes de rotation $N_2$, $N_3$ des systèmes propulsifs latéraux 2, 3. En outre, l'unité électronique 4 détermine la phase de déplacement de l'aéronef 1 en fonction de différents paramètres de l'aéronef 1, en particulier, l'altitude, la position de la manette des gaz commandant les systèmes propulsifs latéraux 2, la vitesse de l'aéronef et la température ambiante, etc. Ainsi, l'unité électronique 4 permet de détecter la transition d'une phase de déplacement à une autre. De manière avantageuse, l'unité électronique 4 peut modifier la valeur du régime de rotation $N_3$ du système propulsif arrière 3 de manière optimale en fonction de la phase de déplacement de l'aéronef 1. Dans cet exemple de mise en oeuvre, l'unité électronique 4 comporte une mémoire 40 dans laquelle sont stockés des paramètres.

Il va dorénavant être présenté une gestion de la puissance propulsive selon les phases de déplacements suivantes : une phase de montée P1, une phase de décollage P2, une phase de ralenti P3 et une phase de croisière P4.

Dans cet exemple de mise en oeuvre, le régime de rotation $N_3$ du système propulsif arrière 3 est déterminé en fonction du régime de rotation $N_2$ des deux systèmes propulsifs latéraux 2.

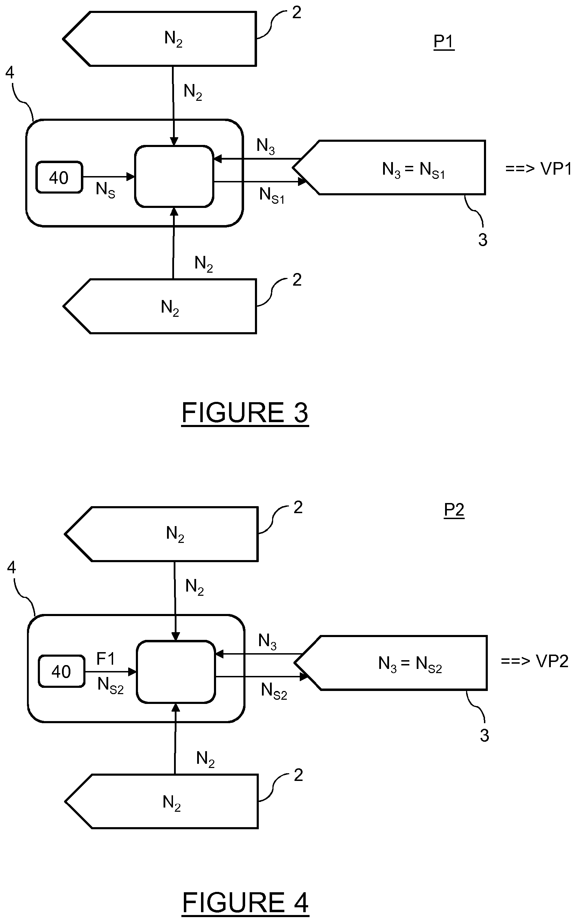

En référence à la figure 3, lors d'une phase de montée P1, l'unité électronique 4 règle le régime de rotation $N_3$ du système propulsif arrière 3 de manière à ce qu'il soit égal à un premier régime de rotation de référence $N_{S1}$ de manière à fournir une première puissance propulsive prédéterminée $VP_1$. Le premier régime de rotation de référence $N_{S1}$ est prédéterminé et stocké dans une mémoire de l'unité électronique 4. De préférence, le premier régime de rotation de référence $N_{S1}$ est fonction de l'altitude, de la vitesse de vol et de la température ambiante. En pratique, pour une première puissance propulsive prédéterminée $VP_1$, le premier régime de rotation de référence $N_{S1}$ varie en fonction des conditions de vol.

Ainsi, lors de la phase de montée P1, la première puissance propulsive prédéterminée $V_{P1}$ ne dépend pas du régime de rotation $N_2$ du système propulsif latéral 2. De manière préférée, la première puissance propulsive $VP_1$ est déterminée de manière à correspondre à la puissance maximale continue du moteur électrique 30 du système propulsif arrière 3. Cela permet avantageusement d'utiliser le système propulsif arrière 3 afin d'ingérer un maximum de couche limite et minimiser la consommation de carburant.

En référence à la figure 4, lors d'une phase de décollage P2, l'unité électronique 4 règle le régime de rotation $N_3$ du système propulsif arrière 3 de manière à ce qu'il soit égal à un deuxième régime de rotation de référence $N_{S2}$ de manière à fournir une deuxième puissance propulsive prédéterminée $V_{P2}$. Le deuxième régime de rotation de référence $N_{S2}$ est prédéterminé et stocké dans la mémoire 40 de l'unité électronique 4. De manière préférée, le deuxième régime de rotation de référence $N_{S2}$ est fonction de l'altitude, de la vitesse de vol et de la température ambiante. Pour les mêmes conditions de vol, le deuxième régime de rotation de référence $N_{S2}$ est strictement supérieur au premier régime de rotation de référence $N_{S1}$ de manière à ce que la deuxième puissance propulsive prédéterminée $V_{P2}$ soit strictement supérieure à la première puissance propulsive prédéterminée $V_{P1}$. En pratique, le deuxième régime de rotation de référence $N_{S2}$ varie en fonction des conditions de vol.

En effet, dans la phase de décollage P2, l'aéronef 1 nécessite une puissance propulsive importante. L'utilisation importante du système propulsif arrière 3 permet de limiter la consommation de carburant des systèmes propulsifs latéraux 2 et de prévenir tout phénomène de pompage dans les systèmes propulsifs latéraux 2.

De manière préférée, la deuxième puissance propulsive $V_{P2}$ est déterminée selon la formule suivante : $V_{p2} = V_{p1} + F1$ dans laquelle F1 est une fonction d'adaptation positive qui dépend de l'altitude de l'aéronef, de la vitesse de l'aéronef, de la position de la manette de commande et de la température ambiante. Dans cet exemple, la fonction d'adaptation F1 est stockée dans la mémoire 40 de l'unité électronique 4.

Lors de la phase de décollage P2, le système propulsif arrière 3 est fortement sollicité pendant une courte période.

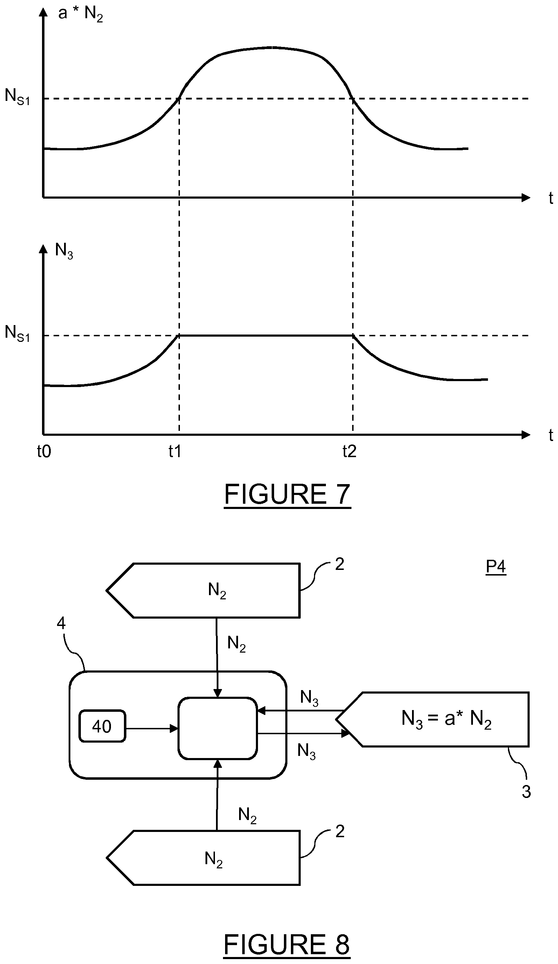

Enfin, en référence à la figure 8, lors d'une phase de croisière P4, l'unité électronique 4 règle le régime de rotation $N_3$ du système propulsif arrière 3 selon la formule suivante :

$$N_3 = a * N_2$$

dans laquelle a est une constante.

De manière préférée, la soufflante d'un système propulsif latéral 2 ayant un diamètre d2 et la soufflante d'un système propulsif arrière 3 ayant un diamètre d3, le procédé comprend une étape de réglage du régime de rotation $N_3$ du système propulsif arrière 3 selon la formule suivante :

$$d_3 * N_3 = b * d_2 * N_2$$

dans laquelle b est une constante comprise entre 0,85 et 1,15.

Ainsi, selon l'invention, les vitesses en tête des aubes de soufflantes sont sensiblement égales. cela permet un dimensionnement optimal des systèmes propulsifs.

De manière avantageuse, lors de la phase de croisière P4, le système propulsif arrière 3 est utilisé d'une manière à optimiser à la fois son rendement et les performances des systèmes propulsifs latéraux 2. Le régime de rotation $N_3$ est synchronisé avec le régime de rotation $N_2$ afin d'optimiser les performances.

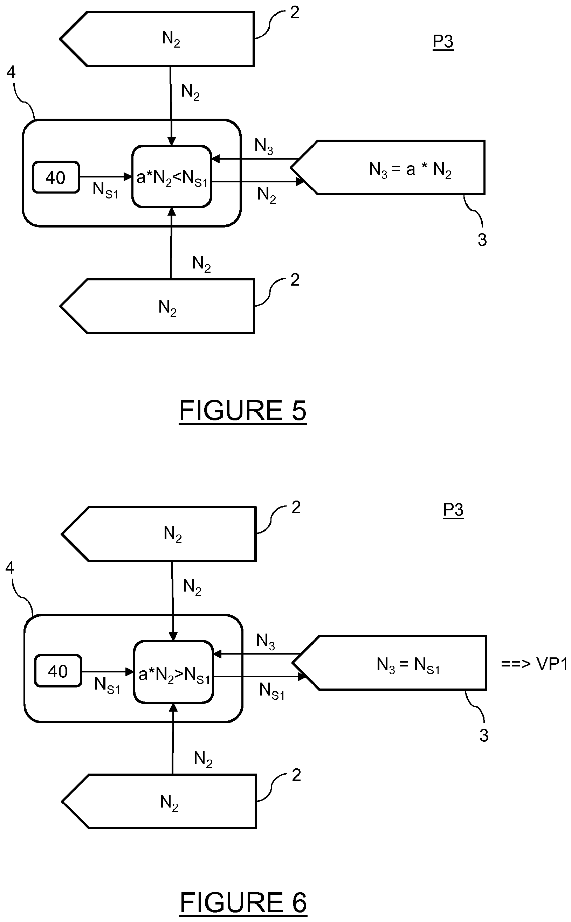

En référence à la figure 5, lors d'une phase de ralenti P3, l'unité électronique 4 règle le régime de rotation $N_3$ du système propulsif arrière 3 en fonction du régime de rotation $N_2$ du système propulsif latéral 2. Par phase de ralenti P3, on entend aussi bien une phase de ralenti au sol qu'une phase de ralenti en vol.

A titre d'exemple, la figure 7 est une représentation schématique d'une phase de ralenti au cours de laquelle les conditions de vol n'évoluent pas. En référence aux figures 5 et 7, si le régime de rotation $N_2$ des systèmes propulsifs latéraux 2 multiplié par la constante a est inférieur au premier régime de rotation de référence $N_{S1}$ (a* $N_2$< $N_{S1}$), le régime de rotation $N_3$ du système propulsif arrière 3 est réglé de manière à être fonction du régime de rotation $N_2$ des systèmes propulsifs latéraux 2. De manière préférée, le régime de rotation $N_3$ du système propulsif arrière 3 est défini selon la formule $N_3$ = a * $N_2$ présentée précédemment.

Ainsi, le système propulsif arrière 3 délivre une puissance propulsive inférieure à la première puissance propulsive prédéterminée $V_{P1}$ et s'adapte à la puissance des systèmes propulsifs latéraux 2 pour obtenir des performances optimales.

A l'inverse, en référence aux figures 6 et 7, si le régime de rotation $N_2$ des systèmes propulsifs latéraux 2 multiplié par la constante a est supérieur au premier régime de rotation de référence $N_{S1}$ (a* $N_2$> $N_{S1}$), alors le régime de rotation $N_3$ du système propulsif arrière 3 est égal au premier régime de rotation de référence $N_{S1}$. Ainsi, le système propulsif arrière 3 délivre une puissance propulsive qui est limitée à la première puissance propulsive prédéterminée $V_{P1}$. Selon le procédé de gestion, le régime de rotation $N_3$ du système propulsif arrière 3 est bridé de manière à éviter un dépassement des limites de fonctionnement du système propulsif arrière 3. En outre, cela permet d'éviter au système propulsif arrière 3 de fonctionner en dehors de sa plage de hautrendement, ce qui est avantageux.

En référence à la figure 7 représentant un cas théorique avec des conditions de vol constantes, sur la période t0-t1, lorsque le régime N2 des systèmes propulsifs latéraux 2 multiplié par la constante a est inférieur au premier régime de rotation de référence $N_{S1}$ (a* $N_2$< $N_{S1}$), le régime de rotation $N_3$ du système propulsif arrière 3 est réglé de manière à être fonction du régime de rotation $N_2$ des systèmes propulsifs latéraux 2. De manière préférée, le régime de rotation $N_3$ du système propulsif arrière 3 est défini selon la formule $N_3$ = a * $N_2$ présentée précédemment. Sur la période t1-t2, lorsque le régime de rotation $N_2$ des systèmes propulsifs latéraux 2 multiplié par la constante a est supérieur au premier régime de rotation de référence $N_{S1}$ (a* $N_2$> $N_{S1}$), le régime de rotation $N_3$ du système propulsif arrière 3 est égal au premier régime de rotation de référence Nsi.

Sur la figure 7, le premier régime de rotation de référence $N_{S1}$ est constant mais il va de soi qu'il pourrait être variable en fonction des conditions de vol.

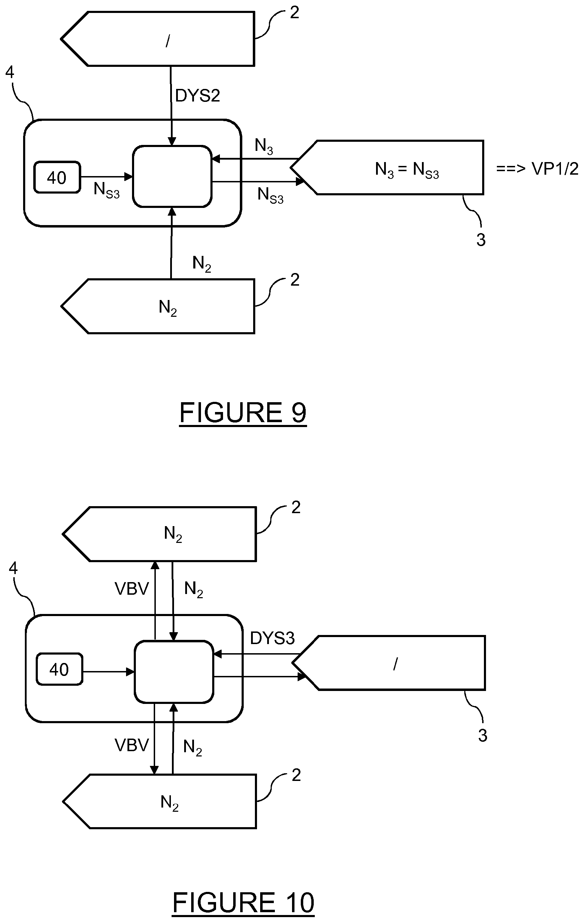

En référence à la figure 9, le procédé de gestion permet aussi de traiter les cas critiques de panne d'un des systèmes propulsifs latéraux 2. En effet, lors d'une panne d'un des systèmes propulsifs latéraux 2, l'unité électronique 4 règle le régime de rotation $N_3$ du système propulsif arrière 3 de manière à être égal à un troisième régime de rotation de référence $N_{S3}$ afin de fournir la moitié de la première puissance propulsive prédéterminée $V_{P1}$. Dans cet exemple, le troisième régime de rotation de référence $N_{S3}$ est notamment fonction de l'altitude, de la vitesse de vol et de la température ambiante.

En pratique, l'unité électronique 4 mesure un dysfonctionnement DYS2 d'un des systèmes propulsifs latéraux 2 et émet une consigne de régime de rotation $N_{S3}$ au système propulsif arrière 3 comme illustré à la figure 9 afin de fournir la moitié de la première puissance propulsive prédéterminée $V_{P1}$.

Autrement dit, le système propulsif arrière 3 diminue son influence afin d'éviter de fournir une puissance propulsive plus importante que celle que le système propulsif latéral 2 qui est en fonctionnement est capable de fournir. Etant donné que 50% de la puissance propulsive latérale est empêchée du fait de la panne d'un des systèmes propulsifs latéraux 2, la puissance propulsive arrière 3 peut être diminuée de manière proportionnelle afin de garantir un fonctionnement optimal.

En référence à la figure 10, ledit procédé de gestion permet également de traiter le cas critique de panne du système propulsif arrière 3. Dans le cas présent, lors d'une panne du système propulsif arrière 3, l'unité électronique 4 impose l'ouverture des vannes décharge des systèmes propulsifs latéraux 2 afin d'éviter l'apparition d'un phénomène de pompage. Les vannes de décharge, connues de l'homme du métier sous sa désignation anglaise « variable bleed valve » permettent avantageusement d'éviter les surpressions d'air à l'intérieur du compresseur d'une turbomachine d'un système propulsif latéral 2 en évacuant vers l'extérieur une quantité d'air susceptible d'engendrer un pompage. En pratique, l'unité électronique 4 mesure un dysfonctionnement DYS3 et émet une consigne d'ouverture des vannes de régulation VBV des systèmes propulsifs latéraux 2 comme illustré à la figure 10.

Grâce à l'invention, les différents systèmes propulsifs 2, 3 sont gérés de manière optimale pour toute phase de déplacement.

En dehors de la phase de croisière P4, le régime

de rotation $N_3$ du système propulsif arrière 3 est déterminé comme suit $N_3 \leq a * N_2$ de manière à obtenir des performances optimales, en particulier, vis-à-vis de la première puissance propulsive prédéterminée $V_{P1}$ pour la montée P1 et le ralenti P3 et vis-à-vis de la deuxième puissance propulsive prédéterminée $V_{P2}$ pour la phase de décollage P2.

**Revendications**

1. Procédé de gestion de la puissance de propulsion d'un aéronef (1), l'aéronef (1) s'étendant longitudinalement selon un axe X d'arrière en avant et comprenant au moins deux systèmes propulsifs latéraux thermiques (2) comprenant chacun une soufflante, chaque système propulsif latéral ayant un régime de rotation de soufflante $N_2$ et au moins un système propulsif arrière (3) configuré pour ingérer une couche limite dudit aéronef (1), le système propulsif arrière (3) comprenant une soufflante ayant un régime de rotation de soufflante $N_3$, **procédé de gestion caractérisé par le fait qu'**il comprend, au cours d'une phase de croisière P4, une étape de réglage du régime de rotation $N_3$ du système propulsif arrière (3) selon la formule suivante :

$$N_3 = a * N_2$$

dans laquelle a est une constante.

2. Procédé de gestion selon la revendication 1, dans lequel, la soufflante d'un système propulsif latéral (2) ayant un diamètre d2, la soufflante d'un système propulsif arrière (3) ayant un diamètre d3, le procédé comprend, au cours d'une phase de croisière P4, une étape de réglage du régime de rotation $N_3$ du système propulsif arrière (3) selon la formule suivante :

$$d_3 * N_3 = b * d_2 * N_2$$

dans laquelle b est une constante comprise entre 0,85 et 1,15.

3. Procédé de gestion selon l'une des revendications 1 à 2, comprenant, au cours d'une phase de montée P1 de l'aéronef (1), une étape de réglage du régime de rotation $N_3$ du système propulsif arrière (3) à un premier régime de rotation de référence $N_{S1}$ de manière à fournir une première puissance propulsive constante prédéterminée $VP_1$.

4. Procédé de gestion selon la revendication 3, comprenant, au cours d'une phase de ralenti P3, une étape de réglage du régime de rotation $N_3$ du système propulsif arrière (3) en fonction du régime de rotation $N_2$ des systèmes propulsifs latéraux (2) dans lequel :

- si le régime de rotation $N_2$ des systèmes propulsifs latéraux (2) multiplié par la constante a est inférieur au premier régime de rotation de référence $N_{S1}$, le régime de rotation $N_3$ du système propulsif arrière (3) est réglé selon la formule suivante :

$$N_3 = a * N_2$$

- si le régime de rotation $N_2$ des systèmes propulsifs latéraux (2) multiplié par la constante a est supérieur au premier régime de rotation de référence Nsi, le régime de rotation $N_3$ du système propulsif arrière (3) est égal au premier régime de rotation de référence Nsi.

5. Procédé de gestion selon l'une des revendications 3 à 4, comprenant au cours d'une phase de décollage P2, une étape de réglage du régime de rotation $N_3$ du système propulsif arrière (3) à un deuxième régime de rotation de référence $N_{S2}$ de manière à fournir une deuxième puissance propulsive prédéterminée $VP_2$ strictement supérieure à la première puissance propulsive prédéterminée $VP_1$.

6. Procédé de gestion selon la revendication 5, dans lequel la deuxième puissance propulsive prédéterminée $VP_2$ est définie selon la formule suivante :

$$V_{p2} = V_{p1} + F1$$

- dans laquelle F1 est une fonction d'adaptation positive qui dépend notamment de l'altitude et de la vitesse de l'aéronef.

7. Procédé de gestion selon l'une des revendications 3 à 6, dans lequel le système propulsif arrière (3) comportant au moins une soufflante (30) entraînée par un moteur électrique (31), la première puissance propulsive ($VP_1$) est prédéterminée en fonction de la puissance maximale continue du moteur électrique (31) du système propulsif arrière (3).

8. Procédé de gestion selon l'une des revendications 3 à 7, comprenant :

- en cas de panne d'un des systèmes propulsifs latéraux (2), une étape de réglage du régime de rotation $N_3$ du système propulsif arrière (3) de manière à être égal à un troisième régime de rotation de référence $N_{S3}$ afin de fournir la moitié de la première puissance propulsive prédéterminée $V_{P1}$.

9. Procédé de gestion selon l'une des revendications 1 à 8, dans lequel chaque système propulsif latéral (2) comprenant au moins une vanne de décharge, le procédé comprenant :

- en cas de panne du système propulsif arrière (3), une étape d'ouverture des vannes de décharge des systèmes propulsifs latéraux (2).

10. Procédé de gestion selon l'une des revendications 1 à 9, dans lequel en dehors de la phase de croisière (P4), le régime de rotation $N_3$ du système propulsif arrière (3) est défini selon la formule suivante $N_3 \leq a * N_2$.

11. Programme d'ordinateur comprenant des instructions pour l'exécution des étapes d'un procédé de gestion selon l'une des revendications 1 à 10 lorsque ledit programme est exécuté par un ordinateur.

**Patentansprüche**

1. Verfahren zur Steuerung des Antriebsschubs eines Flugzeugs (1), wobei sich das Flugzeug (1) längs gemäß einer Achse X von hinten nach vorn erstreckt und mindestens zwei thermische seitliche Antriebssysteme (2) umfasst, die jeweils ein Gebläse umfassen, wobei jedes seitliche Antriebssystem eine Gebläsedrehzahl $N_2$ hat, und mindestens ein hinteres Antriebssystem (3), das ausgelegt ist, um eine Grenzschicht des Flugzeugs (1) aufzunehmen, wobei das hintere Antriebssystem (3) ein Gebläse mit einer Gebläsedrehzahl $N_3$ umfasst, wobei das Steuerungsverfahren **dadurch gekennzeichnet ist, dass** es während einer Streckenflugphase P4 einen Schritt der Regelung der Drehzahl $N_3$ des hinteren Antriebssystems (3) gemäß der folgenden Formel umfasst:

$$N_3 = a * N_2$$

in welcher a eine Konstante ist.

2. Steuerungsverfahren nach Anspruch 1, wobei, wobei das Gebläse eines seitlichen Antriebssystems (2) einen Durchmesser d2 hat, das Gebläse eines hinteren Antriebssystems (3) einen Durchmesser d3 hat, wobei das Verfahren während einer Streckenflugphase P4 einen Schritt der Regelung der Drehzahl $N_3$ des hinteren Antriebssystems (3) gemäß der folgenden Formel umfasst:

$$d_3 * N_3 = b * d_2 * N_2$$

in welcher b eine Konstante ist, die zwischen 0,85 und 1,15 liegt.

3. Steuerungsverfahren nach einem der Ansprüche 1 bis 2, das während einer Steigphase P1 des Flugzeugs (1) einen Schritt der Regelung der Drehzahl $N_3$ des hinteren Antriebssystems (3) auf eine erste Referenzdrehzahl $N_{S1}$ umfasst, so dass eine erste vorbestimmte konstante Antriebsleistung $VP_1$ bereitgestellt wird.

4. Steuerungsverfahren nach Anspruch 3, das während einer Verlangsamungsphase P3 einen Schritt der Regelung der Drehzahl $N_3$ des hinteren Antriebssystems (3) in Abhängigkeit von der Drehzahl $N_2$ der seitlichen Antriebssysteme (2) umfasst, wobei:

- wenn die Drehzahl $N_2$ der seitlichen Antriebssysteme (2) multipliziert mit der Konstanten a niedriger als die erste Referenzdrehzahl $N_{S1}$ ist, die Drehzahl $N_3$ des hinteren Antriebssystems (3) gemäß der folgenden Formel geregelt wird:

$$N_3 = a * N_2$$

- wenn die Drehzahl $N_2$ der seitlichen Antriebssysteme (2) multipliziert mit der Konstanten a höher als die erste Referenzdrehzahl $N_{S1}$ ist, die Drehzahl $N_3$ des hinteren Antriebssystems (3) gleich der ersten Referenzdrehzahl $N_{S1}$ ist.

5. Steuerungsverfahren nach einem der Ansprüche 3 bis 4, das während einer Startphase P2 einen Schritt der Regelung der Drehzahl $N_3$ des hinteren Antriebssystems (3) auf eine zweite Referenzdrehzahl $N_{S2}$ umfasst, so dass eine zweite vorbestimmte Antriebsleistung $VP_2$ bereitgestellt wird, die strikt größer als die erste vorbestimmt Antriebsleistung $VP_1$ ist.

6. Steuerungsverfahren nach Anspruch 5, wobei die zweite vorbestimmte Antriebsleistung $VP_2$ gemäß der folgenden Formel definiert ist:

$$V_{p2} = V_{p1} + F1$$

- in welcher F1 eine positive Anpassungsfunktion ist, die insbesondere von der Höhe und von der Geschwindigkeit des Flugzeugs abhängt.

7. Steuerungsverfahren nach einem der Ansprüche 3 bis 6, wobei das hintere Antriebssystem (3) mindestens ein Gebläse (30) aufweist, das von einem Elektromotor (31) angetrieben wird, wobei die erste Antriebsleistung ($VP_1$) in Abhängigkeit von der kontinuierlichen maximalen Leistung des Elektromotors (31) des hinteren Antriebssystems (3) vorbestimmt ist.

**8.** Steuerungsverfahren nach einem der Ansprüche 3 bis 7, umfassend:

- bei einer Panne eines der seitlichen Antriebssysteme (2) einen Schritt der Regelung der Drehzahl $N_3$ des hinteren Antriebssystems (3), so dass sie gleich einer dritten Referenzdrehzahl $N_{S3}$ ist, um die Hälfte der ersten vorbestimmten Antriebsleistung $V_{P1}$ bereitzustellen.

**9.** Steuerungsverfahren nach einem der Ansprüche 1 bis 8, wobei jedes seitliche Antriebssystem (2) mindestens ein Entlastungsventil umfasst, wobei das Verfahren umfasst:

- bei einer Panne des hinteren Antriebssystems (3) einen Schritt des Öffnens der Entlastungsventile der seitlichen Antriebssysteme (2).

**10.** Steuerungsverfahren nach einem der Ansprüche 1 bis 9, wobei außerhalb der Streckenflugphase (P4) die Drehzahl $N_3$ des hinteren Antriebssystems (3) gemäß der folgenden Formel $N_3 \leq a * N_2$ definiert ist.

**11.** Rechnerprogramm, umfassend Befehle für die Ausführung der Schritte eines Steuerungsverfahren nach einem der Ansprüche 1 bis 10, wenn das Programm von einem Rechner ausgeführt wird.

**Claims**

**1.** A method for managing the propulsion power of an aircraft (1), the aircraft (1) extending longitudinally along an axis X from back to front and comprising at least two thermal side propulsive systems (2) each comprising a fan, each side propulsive system having a fan rotation speed $N_2$ and at least one back propulsive system (3) configured to ingest a boundary layer of said aircraft (1), the back propulsive system (3) comprising a fan having a fan rotation speed $N_3$, which management method is **characterised in that** it comprises, during a cruise phase P4, a step of adjusting the rotation speed $N_3$ of the back propulsive system (3) according to the following formula:

$$N_3 = a * N_2$$

in which a is a constant.

**2.** The management method according to claim 1, wherein, with the fan of a side propulsive system (2) having a diameter d2, the fan of a back propulsive system (3) having a diameter d3, the method comprises, during a cruise phase P4, a step of adjusting

the rotation speed $N_3$ of the back propulsive system (3) according to the following formula:

$$D_3 * N_3 = b * d_2 * N_2$$

in which b is a constant of between 0.85 and 1.15.

**3.** The management method according to one of claims 1 to 2, comprising, during a climb phase P1 of the aircraft (1), a step of adjusting the rotation speed $N_3$ of the back propulsive system (3) to a first reference rotation speed $N_{S1}$ so as to provide a first predetermined constant propulsive power $VP_1$.

**4.** The management method according to claim 3, comprising, during an idle phase P3, a step of adjusting the rotation speed $N_3$ of the back propulsive system (3) depending on the rotation speed $N_2$ of the side propulsive systems (2) wherein:

- if the rotation speed $N_2$ of the side propulsive systems (2) multiplied by the constant a is lower than the first reference rotation speed $N_{S1}$, the rotation speed $N_3$ of the back propulsive system (3) is adjusted according to the following formula:

$$N_3 = a * N_2$$

- if the rotation speed $N_2$ of the side propulsive systems (2) multiplied by the constant a is greater than the first reference rotation speed $N_{S1}$, the rotation speed $N_3$ of the back propulsive system (3) is equal to the first reference rotation speed $N_{S1}$.

**5.** The management method according to one of claims 3 to 4, comprising during a take-off phase P2, a step of adjusting the rotation speed $N_3$ of the back propulsive system (3) to a second reference rotation speed $N_{S2}$ so as to provide a second predetermined propulsive power $VP_2$ strictly greater than the first predetermined propulsive power $VP_1$.

**6.** The management method according to claim 5, wherein the second predetermined propulsive power $VP_2$ is defined according to the following formula:

$$V_{p2} = V_{p1} + F1$$

- in which F1 is a positive adaptation function which especially depends on the altitude and velocity of the aircraft.

**7.** The management method according to one of claims 3 to 6, wherein with the back propulsive system (3) comprising at least one fan (30) driven by an electric motor (31), the first propulsive power ($VP_1$) is pre-determined depending on the continuous maximum power of the electric motor (31) of the back propulsive system (3).

8. The management method according to one of claims 3 to 7, comprising:

- in case of failure of one of the side propulsive systems (2), a step of adjusting the rotation speed $N_3$ of the back propulsive system (3) so as to be equal to a third reference rotation speed $N_{S3}$ in order to provide half the first predetermined propulsive power $VP_1$.

9. The management method according to one of claims 1 to 8, wherein with each side propulsive system (2) comprising at least one bleed valve, the method comprising:

- in case of failure of the back propulsive system (3), a step of opening the bleed valves of the side propulsive systems (2).

10. The management method according to one of claims 1 to 9, wherein outside the cruise phase (P4), the rotation speed $N_3$ of the back propulsive system (3) is defined according to the following formula $N_3 \leq a * N_2$.

11. A computer program comprising instructions for executing the steps of a management method according to one of claims 1 to 10 when said program is executed by a computer.

## FIGURE 1

## FIGURE 2

FIGURE 3

FIGURE 4

N₂ — 2

P3

4

40 → N_{S1} → a*N₂<N_{S1}

N₃

N₃ = a * N₂ — 3

N₂

N₂

N₂ — 2

## FIGURE 5

N₂ — 2

P3

4

40 → N_{S1} → a*N₂>N_{S1}

N₃

N₃ = N_{S1} — 3

==> VP1

N_{S1}

N₂

N₂

N₂ — 2

## FIGURE 6

FIGURE 7

FIGURE 8

## FIGURE 9

## FIGURE 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018118356 A1
- EP 3326910 A1

- US 2016355272 A